# EUROPÄISCHE PATENTSCHRIFT

(11) **EP 3 760 911 B1**
(45) Veröffentlichungstag und Bekanntmachung des Hinweises auf die Patenterteilung: **11.01.2023**
(21) Anmeldenummer: 20184040.2
(22) Anmeldetag: 03.07.2020
(51) Int. Cl.: F17C 3/08

(54) **TANK SOWIE VERFAHREN**
TANK AND METHOD
RÉSERVOIR AINSI QUE PROCÉDÉ

(30) Priorität: 05.07.2019 DE 102019118323
(43) Veröffentlichungstag der Anmeldung: 06.01.2021
(73) Patentinhaber: ArianeGroup GmbH, 82024 Taufkirchen (DE); Deutsches Zentrum Für Luft- Und Raumfahrt E.V. (DLR), 51147 Köln (DE)
(72) Erfinder: Quatmann, Michael, 28199 Bremen (DE); Wendt, Christian, 28199 Bremen (DE); Quappen, Gerrit, 28199 Bremen (DE); Quadt, Markus, 28199 Bremen (DE); Kleineberg, Markus, 51147 Köln (DE); Röstermund, Dirk, 51147 Köln (DE); Stüve, Jan, 51147 Köln (DE); Stefaniak, Daniel, 51147 Köln (DE); Kolbe, Andreas, 51147 Köln (DE)
(74) Vertreter: Marschall, Stefan

(56) Entgegenhaltungen:
- EP-A1- 2 340 205
- GB-A- 812 375
- US-A- 5 085 343
- US-A1- 2012 205 493
- US-A1- 2014 117 021

## Beschreibung

Die Erfindung betrifft zunächst einen Tank zur Lagerung von flüssigen oder gasförmigen Stoffen, mit einem faserverstärkten Kunststoffmantel, der zumindest einen Innenraum zur Aufnahme der zu lagernden Stoffe begrenzt. Darüber hinaus hat die Erfindung ein Verfahren zur Herstellung eines derartigen Tanks zur Lagerung von flüssigen oder gasförmigen Stoffen zum Gegenstand.

Trägerraketen für kommerzielle oder militärische Nutzlasten sind häufig mit Triebwerken bestückt, die mit flüssigen und tiefkalten Treibstoffkomponenten, wie zum Beispiel Wasserstoff/Sauerstoff betrieben werden. Konstruktiv einfacher aufgebaute Feststofftriebwerke lassen sich im Vergleich zu Flüssigkeitstriebwerken nur schwer regeln und in der Regel nur einmal zünden. Zur Lagerung der flüssigen oder gasförmigen und vielfach tiefkalten Treibstoffe bzw. Treibstoffkomponenten sind Tanks mit einem hohen thermischen Isoliervermögen, einer geringen Permeabilität bzw. Durchlässigkeit oder hohen Dichtigkeit und einem geringen Gewicht vonnöten. Zudem müssen derartige Tanks aufgrund der darin gelagerten, hochexplosiven Treibstoffe über einen möglichst wirkungsvollen Explosionsschutz verfügen.

Bei zurzeit im Betrieb befindlichen Oberstufen von Trägerraketen kommen metallische kryogene Tanks aus Aluminium und in selteneren Fällen auch mit carbonfaserverstärkten bzw. kohlenstofffaserverstärkten Kunststoffen (CFK, engl. "Carbon Fibre Reinforced Plastic, CFRP") gebildete Strukturen in monolithischer Ausführung zum Einsatz. Hierbei finden im Allgemeinen zwei räumlich vollständig voneinander getrennte Tanks zur Bevorratung jeweils einer Treibstoffkomponente Verwendung. Die Kontrolle der niedrigen Treibstofftemperaturen erfordert ein separates thermisches Isolationskonzept, welches zusätzliche Trockenmasse, Produktionskosten und Komplexität verursacht. So erhöht eine thermische Schaumisolierung das Gewicht des Tanks, ohne zu dessen struktureller Stabilität beizutragen. Zudem reduziert zwar eine solche Schaumisolierung effektiv den konvektiven Wärmetransport am Boden, ist aber bezüglich der Verringerung des Wärmetransports durch Strahlung im Weltraum weit weniger geeignet als entsprechend beschichtete Oberflächen oder Systeme von beschichteten Oberflächen, wie zum Beispiel eine s. g. "Multilayer Insulation (MLI)". Die Begrenzung der Permeabilität und der Leckagen bei Tanks aus Faserverbundkunststoffen erfolgt vielfach durch eine Erhöhung der Tankwandstärken und/oder die Nutzung zusätzlicher metallischer Liner bzw. Auskleidungen, Beschichtungen oder Folien, was jedoch ebenfalls zu einer Erhöhung des Gewichts, der Systemkomplexität und damit der Herstellungskosten führt.

Darüber hinaus sind vakuumisolierte Tanks oder Kryostaten aus Edelstahl oder glasfaserverstärkten Kunststoffen (GFK) sowie seltener aus carbonfaserverstärkten Kunststoffen aus dem Stand der Technik bekannt (vgl.: https://www.ilkdresden.de/projekt/kryostate-aus-gfk- oder-metall/). Diese Tanks sind für sehr niedrige Abdampfraten konzipiert und weisen im Falle des Einsatzes von faserverstärkten Kunststoffen (FVK) auch eine niedrige Permeabilitätsrate bzw. Durchlässigkeit auf. Die Wandungen dieser Tanks weisen zur Erzielung dieser Eigenschaften jedoch eine vergleichsweise hohe Materialstärke auf, so dass die Tanks für Raumfahrtanwendungen im Allgemeinen ungeeignet sind.

Ferner sind Tanks für Raketenanwendungen aus Faserverbundkunststoffen bekannt, bei denen lediglich in einfach gekrümmten Zonen bzw. hohlzylindrischen Abschnitten des Tanks eine Sandwichstruktur vorgesehen ist. Diese Strukturen werden mit einem Inertgas durchspült, um einen hinreichenden Explosionsschutz sicherzustellen (vgl.: "Design, Manufacture and Test of Cryotank Components" McCarville, 2017). Zur effektiven Spülung können hierbei auch kleinere Vakuumpumpen am Ausgang der Spülkanäle zum Einsatz kommen, die jedoch nicht die Intention verfolgen, zur Vermeidung eines separaten Isolationskonzeptes ein dauerhaft thermisch isolierendes Vakuum innerhalb der Sandwichstruktur zu erzielen (vgl.: Patent US 2012/0205493 A1 [0124]).

Weiterer druckschriftlicher Stand der Technik ist aus der US 2012/205493 A1 bekannt. Diese Druckschrift zeigt einen Tank für ein Launch Vehicle zur Lagerung von flüssigen oder gasförmigen Stoffen mit einem faserverstärkten Kunststoffmantel. Die US 5 085 343 A und die US 2014/117021 A1 nennen jeweils einen Tank für eine Raketenstufe mit einem Strukturspalt bzw. einer Sandwichstruktur, der bzw. die zur Isolation unter Vakuum gehalten werden oder mit einem inerten Gas befüllt werden kann.

Eine Aufgabe der Erfindung ist es, einen verbesserten Tank zur Bevorratung von flüssigen oder gasförmigen Stoffen für ein Raumfahrzeug wie eine Rakete oder eine Raketenstufe bereitzustellen, der über ein gutes thermisches Isoliervermögen und ein reduziertes Gewicht in Verbindung mit einem wirkungsvollen Explosionsschutz verfügt. Darüber hinaus ist es eine Aufgabe der Erfindung, ein Verfahren zur optimierten Herstellung eines solchen Tanks anzugeben.

Die eingangs genannte Aufgabe wird zunächst dadurch gelöst, dass mindestens ein Umfangsabschnitt des faserverstärkten Kunststoffmantels eine evakuierbare Sandwichstruktur aufweist, die den Umfangsabschnitt vollständig umschließt. Hierdurch weist der Tank eine weitgehend gewichtsneutrale thermische Isolierung auf, die zugleich einen ausgezeichneten Explosionsschutz sicherstellt. Im Allgemeinen ist bereits unterhalb von 1,0 hPa ein ausreichender Explosionsschutz gewährleistet (siehe so genannte "Explosionsgrenze"). Zum Zwecke der thermischen Vakuum-Isolation ist die evakuierbare Sandwichstruktur des Tanks mit einem deutlich geringeren Druck beaufschlagt, der bevorzugt im Bereich zwischen 0,0001 hPa und 0,01 hPa liegt. Die evakuierbare und vorzugsweise lasttragende Sandwichstruktur erstreckt sich bevorzugt axial beidseitig über den einen Umfangsabschnitt des Tanks hinaus und kann beispielsweise zumindest bereichsweise eine Außenhülle einer mit dem Tank auszurüstenden Rakete oder einer Raketenstufe ausbilden. Die evakuierbare und lasttragende Sandwichstruktur ist bevorzugt umfangsseitig segmentiert ausgebildet, wobei die Segmente in Längsrichtung druckdicht miteinander verbunden sind.

Der mindestens eine Umfangsabschnitt ist ein mittlerer Umfangsabschnitt, an den sich beidseits jeweils ein endseitiger Umfangsabschnitt anschließt, der jeweils mit einer evakuierbaren Außenstruktur bedeckt ist. Hierdurch werden die thermische Isolation sowie der Explosionsschutz des Tanks endseitig vervollständigt.

Der Innenraum ist mittels eines evakuierbaren Trennschotts zur Schaffung einer ersten und einer zweiten Kammer unterteilt. Infolgedessen ist eine Bevorratung von zwei unterschiedlichen flüssigen oder gasförmigen Stoffen bzw. Treibstoffen oder Treibstoffkomponenten wie Wasserstoff und Sauerstoff möglich.

Die evakuierbare Sandwichstruktur des mittleren Umfangsabschnitts, die evakuierbaren Außenstrukturen der beiden endseitigen Umfangsabschnitte sowie das evakuierbare Trennschott sind mit mindestens einer Anschlussleitung zur Evakuierung verbunden sind. Infolgedessen kann zum Beispiel mittels mindestens einer Vakuumpumpe die notwendige thermische Isolation sowie der Explosionsschutz des Tanks durch das Beaufschlagen der Außenstrukturen mit einem Vakuum im Bereich zwischen 0,0001 hPa und 0,01 hPa gewährleistet werden. Zusätzlich kann über die mindestens eine Anschlussleitung oder eine weitere Anschlussleitung ein inertes Spülgas zugeführt werden.

Bevorzugt sind der mittlere Umfangsabschnitt und die beiden endseitigen Umfangsabschnitte mit einem Faserverbundkunststoff gebildet. Hieraus resultiert im Vergleich zu einem konventionellen metallischen Tank eine beträchtliche Gewichtsreduzierung in der Größenordnung von bis zu 40 %.

Im Fall einer weiteren Ausgestaltung ist die evakuierbare Sandwichstruktur fest mit dem mittleren Umfangsabschnitt verbunden und lasttragend ausgeführt. Infolgedessen kann der Tank neben seiner Hauptfunktionalität zugleich strukturmechanisch relevante Lasten mit übernehmen.

Vorzugsweise sind die evakuierbaren Außenstrukturen der beiden endseitigen Umfangsabschnitte mit einer strukturell vereinfacht aufgebauten Sandwichstruktur, insbesondere mit einer beabstandeten Membran und/oder mit einer mit einem Faserverbundkunststoff aufgebauten Stützstruktur, gebildet. Hierdurch sind eine effektive thermische Vakuumisolierung sowie ein Explosionsschutz der endseitigen Umfangsabschnitte des Tanks gegeben. Die evakuierbaren Außenstrukturen der endseitigen Umfangsabschnitte des Tanks haben bevorzugt keine nennenswerte lasttragende Funktion.

Bei einer günstigen Weiterbildung weist jeder der beiden endseitigen Umfangsabschnitte jeweils einen Anschlussstutzen mit einem in Richtung des Innenraums gerichteten Flansch auf, wobei die Flansche jeweils mittels eines mit einem faserverstärkten Kunststoff gebildeten Anschlusselements mit dem jeweils zugeordneten endseitigen Umfangsabschnitt fest verbunden sind. Aufgrund der für faserverstärkte Kunststoffe typischen niedrigen Wärmeausdehnung werden mechanische Spannungen infolge von etwaigen Temperaturunterschieden auf ein Minimum reduziert. Die Anschlusselemente sind bevorzugt als kreisringförmige, so genannte "Domringe" ausgeführt, die mit den Flanschen der Anschlussstutzen in Polbereichen der näherungsweise kalottenförmigen, endseitigen Endabschnitte des Kunststoffmantels verklebt werden. Die Flansche sind bevorzugt jeweils mittels eines mit einem glasfaserverstärkten Kunststoff oder mit einem kohlenstofffaserverstärkten Kunststoff gebildeten Anschlusselements mit dem jeweils zugeordneten endseitigen Umfangsabschnitt fest verbunden.

Nach Maßgabe einer weiteren vorteilhaften Ausgestaltung weist der mittlere Umfangsabschnitt einen ersten Hohlzylinderabschnitt und einen zweiten Hohlzylinderabschnitt auf, deren einander zugewandte freie Endabschnitte mittels einer bevorzugt radial innenliegenden Verbindungshülse zur Schaffung des Kunststoffmantels zusammengefügt sind, wobei das evakuierbare Trennschott seinerseits innenseitig mit der Verbindungshülse verbunden ist. Hierdurch kann der Tank mit nur einer Verbindungszone realisiert werden.

Bei einer weiteren Ausgestaltung sind die endseitigen Umfangsabschnitte einstückig zum mittleren Umfangsabschnitt ausgeführt und jeweils von der Verbindungshülse weggerichtet sowie im Wesentlichen kalottenförmig ausgebildet. Hierdurch ergibt sich eine ausgezeichnete Druckfestigkeit des Tanks bei einem zugleich minimalen Einbauplatzbedarf.

Im Fall einer weiteren technisch vorteilhaften Weiterbildung des Tanks weist die erste Kammer eine Entnahme- und Befüllungsleitung und die zweite Kammer eine Be- und Entdrückungsleitung auf. Durch die der ersten, oberen Kammer zugeordnete Entnahmeleitung und den der zweiten, unteren Kammer zugeordneten zweiten, unteren Anschlussstutzen ist eine individuelle Entnahme des flüssigen oder gasförmigen Stoffs aus den Kammern oder eine voneinander unabhängige Beladung der Kammern mit dem flüssigen oder gasförmigen Stoff möglich. Mittels des oberen, ersten Anschlussstutzens und der, der zweiten, unteren Kammer zugeordneten Be- und Entdrückungsleitung ist eine individuelle Beaufschlagung der beiden Kammern mit einem Druckpolster und/oder eine Belüftung möglich.

Nach Maßgabe einer günstigen technischen Ausgestaltung weisen die evakuierbare Sandwichstruktur des mittleren Umfangsabschnitts, die evakuierbaren Außenstrukturen der endseitigen Umfangsabschnitte sowie das evakuierbare Trennschott elektrische oder optische Leitungen und/oder Sensoren auf. Infolgedessen erübrigt sich eine nachträgliche Montage der Sensorik im inneren Bereich des Tanks. Bevorzugt sind alle elektrischen und optischen Leitungen in der Sandwichstruktur verlegt, so dass auf separate Kabelkanäle verzichtet werden kann.

Bevorzugterweise ist zumindest die evakuierbare Sandwichstruktur des mittleren Umfangsabschnitts im Bereich des Vakuums mittels optischer Beschichtungen, einer mehrlagigen Isolation und/oder eines Trübungsmittels derart modifiziert, dass ein Wärmetransport durch Strahlung effektiv reduziert ist. Hierdurch lässt sich die thermische Isolation des Tanks weiter optimieren. Eine mehrlagige Isolation bzw. s. g. "Multilayer Insulation" oder "MLI" weist in der Regel eine Vielzahl von übereinander angeordneten Folien auf, die zudem metallisch bedampft sind. Zur Beabstandung der Folien innerhalb der Stapelanordnungen dienen eine geeignete Prägung der Folien, Gewebe, Gaze oder dergleichen als Zwischenleger. Durch eine derartige "Multilayer Insulation" als zusätzliches Wärmedämmmaterial lässt sich der unerwünschte Wärmetransport durch Strahlung besonders effektiv reduzieren.

Darüber hinaus wird die eingangs genannte Aufgabe durch ein Verfahren zur Herstellung eines Tanks zur Lagerung von flüssigen oder gasförmigen Stoffen, insbesondere nach Maßgabe eines der Patentansprüche 1 bis 10, gekennzeichnet durch die folgenden Verfahrensschritte gelöst:
a) Vorfertigen von zwei vorzugsweise volumenverschiedenen und im Wesentlichen durchmessergleichen Tankrohlingen mit einem Faserverbundkunststoff,
b) Durchtrennen des ersten und zweiten Tankrohlings quer zu deren Längsmittelachsen in eine erste und eine zweite Tankkomponente des ersten Tankrohlings sowie eine erste und zweite Tankkomponente des zweiten Tankrohlings, und
c) Zusammenfügen jeweils einer Tankkomponente des ersten Tankrohlings und jeweils einer Tankkomponente des zweiten Tankrohlings zu einem ersten und einem zweiten Tank .

Hierdurch ist eine besonders einfache und serientaugliche Fertigung der Tanks gegeben. Die beiden Tankrohlinge weisen vor dem Durchtrennen jeweils eine Geometrie auf, die der eines Hohlzylinders mit kugelschichtförmigen endseitigen Umfangsabschnitten entspricht, die jeweils eine kreisförmige Öffnung zur Aufnahme eines Anschlussstutzens mit einem Anschlusselement aus einem Faserverbundkunststoff zum Einkleben aufweisen. Die Öffnungen der Kugelabschnitte weisen im Vergleich zum Durchmesser der hohlzylindrischen Abschnitte der Tankrohlinge jeweils einen deutlich reduzierten Durchmesser auf.

Bei einer technisch günstigen Fortbildung ist vorgesehen, dass auf mindestens einen mittleren Umfangsabschnitt jedes Tanks eine lasttragende und evakuierbare Sandwichstruktur aufgebracht wird. Hierdurch ist eine thermische Isolation des Tanks gegeben, die zugleich einen zuverlässigen Explosionsschutz gewährleistet. Die mittleren Umfangsabschnitte eines jeden Tanks weisen eine jeweils näherungsweise hohlzylindrische Geometrie auf, während die endseitigen Umfangsabschnitte eines jeden Tanks im Wesentlichen zweidimensional gekrümmt bzw. kalottenförmig bzw. konvex nach außen gekrümmt ausgeführt sind.

Im Fall einer vorteilhaften Weiterbildung des Verfahrens wird auf jeweils zwei endseitige Umfangsabschnitte jedes Tanks jeweils eine evakuierbare Außenstruktur aufgebracht. Hierdurch können die thermische Isolation sowie der Explosionsschutz des Tanks weiter optimiert werden. Die evakuierbaren Außenstrukturen der endseitigen Umfangsabschnitte weisen im Gegensatz zu dem der Sandwichstruktur der mittleren Umfangsabschnitte im Wesentlichen keine relevante mechanische Lasttragfähigkeit auf. Durch zumindest bereichsweises Weglassen der evakuierbaren Außenstruktur im Bereich der beiden endseitigen Umfangsabschnitte bzw. der Domkappen, kann der Herstellungsprozess des Tanks vereinfacht werden. Als Ersatz kann erforderlichenfalls eine nicht evakuierbare, kompakte bzw. monolithische Außenstruktur, zum Beispiel in der Form einer Beschichtung, eines Belags, einer Umhüllung etc. ohne evakuierbare Hohlräume vorgesehen sein. Die Beschichtung, der Belag oder die Umhüllung sind wiederum bevorzugt mit einem faserverstärkten Kunststoff gebildet.

Bei einer günstigen Ausgestaltung werden die erste Tankkomponente des ersten Tankrohlings und die zweite Tankkomponente des zweiten Tankrohlings sowie die zweite Tankkomponente des ersten Tankrohlings und die erste Tankkomponente des zweiten Tankrohlings mittels jeweils einer vorzugsweise radial innenliegenden Verbindungshülse zusammengefügt. Hierdurch lassen sich auf einfache Art und Weise zwei voneinander getrennte Tankräume herstellen, die jeweils ein unterschiedliches Fassungsvermögen aufweisen können. Zugleich ist der Tank mit einer Doppelkammer und lediglich einer Verbindungszone realisierbar.

Bevorzugt wird vor oder während des Verfahrensschrittes c) innenliegend an jeder Verbindungshülse der beiden Tanks ein evakuierbares Trennschott zur Schaffung einer ersten und zweiten Kammer in jedem der beiden Tanks angeordnet. Infolgedessen kann der Innenraum des Tanks auf einfache Art und Weise in zwei oder mehr vollständig voneinander getrennte Kammern zur Bevorratung unterschiedlicher flüssiger oder gasförmiger Stoffe bzw. Treibstoffkomponenten separiert werden.

Bei einer günstigen Ausgestaltung des Verfahrens erfolgt die Vorfertigung des ersten und zweiten Tankrohlings im Verfahrensschritt a) mittels eines Faserlegeverfahrens, insbesondere eines AFP-Verfahrens oder eines Wickelverfahrens. Infolgedessen lässt sich der Tank mit Hilfe einer erprobten und ausgereiften Technologie fertigen. Unter dem Terminus eines Faserlegeverfahrens werden im Kontext der vorliegenden Beschreibung sowohl das so genannte AFP-Verfahren (= "Automated Fibre Placement") als auch Wickelverfahren im Allgemeinen verstanden. Bevorzugt kommt hier das AFP-Verfahren zum Einsatz, bei dem vorimprägnierte Verstärkungsfaserstränge vollautomatisch und in einem lastflussgerechten Verlauf auf einem geeigneten Formkern abgelegt werden. Der Formkern verfügt zu diesem Zweck über eine Oberflächengeometrie, die mit dem zu schaffenden Innenraum des Tanks im Wesentlichen korrespondiert. Das Entformen der fertig laminierten Tankrohlinge vom Formkern erfolgt hierbei im Wege des Durchtrennens im Verfahrensschritt b). Weiterhin kann das Wickelverfahren zum Einsatz kommen, bei dem vorimprägnierte Verstärkungsfaserstränge vollautomatisch und in einem lastflussgerechten Verlauf auf einem geeigneten, rotierenden Wickelkern abgelegt werden. Der Wickelkern verfügt zu diesem Zweck über eine Oberflächengeometrie, die mit dem zu schaffenden Innenraum des Tanks im Wesentlichen korrespondiert. Das Entformen der fertig gewickelten Tankrohlinge erfolgt wiederum im Wege des Durchtrennens im Verfahrensschritt b).

Bei einer vorteilhaften Weiterbildung des Verfahrens ist vorgesehen, dass im Verfahrensschritt a) jeder der beiden endseitigen Umfangsabschnitte der zwei Tankrohlinge mit einem Anschlussstutzen versehen wird. Infolgedessen ist eine mechanisch besonders robuste Integration der metallischen Anschlussstutzen in die späteren Tanks gewährleistet.

Im Folgenden wird ein bevorzugtes Ausführungsbeispiel der Erfindung anhand von schematischen Figuren näher erläutert.

Es zeigen
- Figur 1: einen schematischen Längsschnitt durch einen erfindungsgemäßen Tank, und
- Figur 2-7: eine schematische Darstellung eines Verfahrens zur Herstellung des Tanks von Fig. 1.

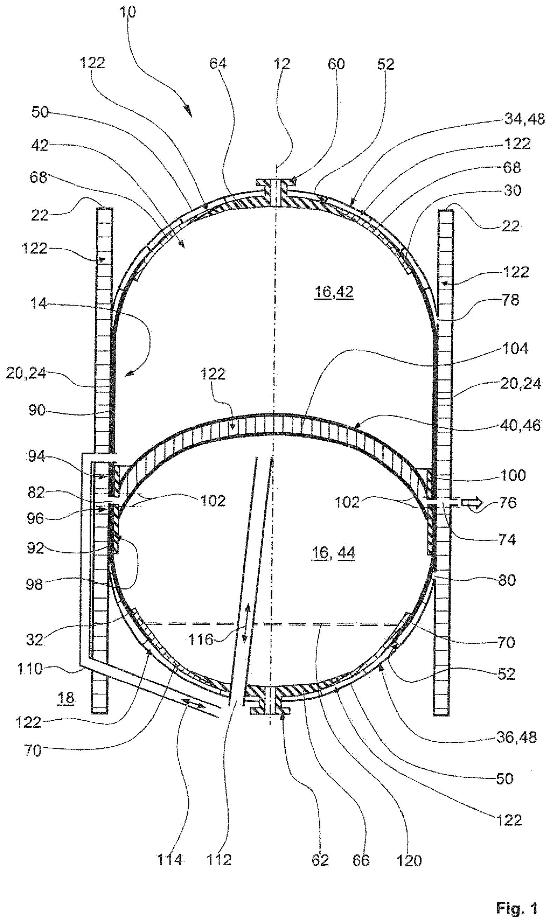

Die Figur 1 illustriert einen schematischen Längsschnitt durch einen erfindungsgemäßen Tank.

Ein Tank 10 zur Lagerung von flüssigen oder gasförmigen Stoffen ist rotationssymmetrisch zu einer Längsmittelachse 12 ausgeführt und umfasst unter anderem einen faserverstärkten Kunststoffmantel 14, der zumindest einen Innenraum 16 zur Aufnahme der zu lagernden Stoffe gegen die äußere Umgebung 18 begrenzt.

Mindestens ein Umfangsabschnitt 20 des faserverstärkten Kunststoffmantels 14 weist eine evakuierbare und bevorzugt lasttragende bzw. lasttragfähige Sandwichstruktur 22 auf. Der Umfangsabschnitt 20 ist hier lediglich exemplarisch als ein mittlerer Umfangsabschnitt 24 ausgebildet. Axial beidseits des mittleren Umfangsabschnitts 24 sind ein erster und zweiter endseitiger Umfangsabschnitt 30, 32 ausgebildet, die jeweils mit einer evakuierbaren jedoch nicht wesentlich lasttragfähigen Außenstruktur 34, 36 versehen sind. Sowohl der mittlere Umfangsabschnitt 24 als auch die beiden endseitigen Umfangsabschnitte 30, 32 sind mit einem massiven, monolithischen Faserverbundkunststoff wie zum Beispiel GFK, CFK bzw. CRFP etc. gebildet. Die lasttragende, evakuierbare Sandwichstruktur 22 ist mechanisch fest mit dem mittleren Umfangsabschnitt 24 verbunden und gleichfalls mit einem Faserverbundkunststoff gebildet.

Der Innenraum 16 des Tanks 10 wird mittels eines ebenfalls evakuierbaren Trennschotts 40 in eine erste Kammer 42 und eine zweite Kammer 44 unterteilt, so dass in jeder Kammer 42, 44 ein anderer flüssiger oder gasförmiger Stoff, wie zum Beispiel Wasserstoff oder Sauerstoff für einen Verbraucher wie ein Raketentriebwerk, sicher lagerbar ist. Durch das Trennschott 40 ist eine unkontrollierte chemische Reaktion der in den Kammern 42, 44 aufgenommenen unterschiedlichen Stoffe oder Flüssigkeiten ausgeschlossen. In dem hier gezeigten Ausführungsbeispiel ist das evakuierbare Trennschott 40 sphärisch gekrümmt bzw. in Richtung der ersten Kammer 42 konvex gebogen. Alternativ kann das Trennschott 40 auch zumindest bereichsweise plan ausgeführt sein. Das evakuierbare Trennschott 40 ist hier mit einer mit einem Faserverbundkunststoff gebildeten durchlässigen Sandwichstruktur 46 als Kernstruktur realisiert.

Die evakuierbaren Außenstrukturen 34, 36 an den endseitigen Umfangsabschnitten 30, 32 sind mit einer strukturell vereinfacht aufgebauten Sandwichstruktur 48 aufgebaut. Die Beabstandung zwischen den endseitigen Umfangsabschnitten 30, 32 des Kunststoffmantels 14 und einer Membran 50 zur Schaffung der strukturell vereinfachten Sandwichstruktur 48 kann beispielsweise mit einer leichten Stützstruktur 52 in Form einer perforierten Honeycomb-Matte oder mit einer Gitterstruktur aus einem mit Aramid^{®}-Fasern verstärkten Kunststoff zur thermischen Isolierung erfolgen. Die leichte Stützstruktur 52 der evakuierbaren Außenstrukturen 34, 36 ist hierbei so beschaffen, dass die Membran 50 auch im evakuierten Zustand hinreichend radial beabstandet in einem definierten Abstand zum Kunststoffmantel 14 des Tanks 10 verläuft. Die strukturell vereinfachte Sandwichstruktur 48 kann hinsichtlich des thermischen Isolationsvermögens und/oder der mechanischen Lasttragfähigkeit in den endseitigen Umfangsabschnitten 30, 32 des Tanks 10, insbesondere in Abhängigkeit von den physikalisch-chemischen Eigenschaften der in den Kammern 42, 44 bevorrateten Flüssigkeit oder Gase erforderlichenfalls unterschiedlich ausgeführt sein. Die beiden endseitigen, konstruktiv komplex aufgebauten evakuierbaren Außenstrukturen 34, 36 können gegebenenfalls zur Vereinfachung des Fertigungsprozesses des Tanks 10 auch weggelassen werden oder zumindest bereichsweise durch in den Zeichnungen nicht dargestellte monolithische bzw. kompakte, das heißt keine evakuierbaren Hohlräume aufweisende Außenstrukturen, Beschichtungen, Beläge oder dergleichen ersetzt werden, die bevorzugt mit einem faserverstärkten Kunststoff gebildet sind.

Die beiden endseitigen Umfangsabschnitte 30, 32 bzw. so genannten "Dome" sind in der Figur 1 lediglich beispielhaft als näherungsweise kalottenförmige bzw. zweidimensional gekrümmte oder sphärisch-konvex gekrümmte Umfangsabschnitte ausgeführt.

Der erste endseitige Umfangsabschnitt 30 weist darüber hinaus einen massiven ersten Anschlussstutzen 60 und der zweite endseitige Umfangsabschnitt 32 weist entsprechend einen massiven zweiten Anschlussstutzen 62 auf. Die beiden rohrartigen Anschlussstutzen 60, 62 sind axial voneinander wegweisend von dem Innenraum 16 bzw. spiegelsymmetrisch zu dem Trennschott 40 orientiert. Jeder der beiden Anschlussstutzen 60, 62 weist jeweils einen großflächigen Flansch 64, 66 bzw. eine Polkappe zur großflächigen Anbindung an den Kunststoffmantel 14 des Tanks 10 auf. Die beiden Flansche 64, 66 sind jeweils mit einem Anschlusselement 68, 70 mit dem jeweiligen endseitigen Umfangsabschnitt 30, 32 des Tanks 10 unter bevorzugter Herstellung einer Schäftung fest miteinander verbunden, insbesondere verklebt. Die mit einem hinreichend elektrisch leitfähigen, faserverstärkten Kunststoff wie CFK oder GFK gebildeten Anschlusselemente 68, 70 bzw. die Domringe weisen im unverbauten Zustand, das heißt im nicht drapierten Zustand, im Wesentlichen eine kreisringförmige Formgebung auf. Durch den Einsatz eines glasfaserverstärkten Kunststoffs für die Anschlusselemente lassen sich zudem mechanische Spannungen aufgrund der im Betrieb des Tanks 10 auftretenden, extremen Temperaturunterschiede minimieren. Die beiden Anschlussstutzen 60, 62 können mit einem massiven Metall wie Aluminium, Magnesium, Titan, Edelstahl, mit einem Faserverbundkunstoff wie GFK, CFK etc. oder mit einer Kombination dieser Werkstoffe bzw. Materialien gefertigt sein, wobei die Flansche 64, 66 jeweils einstückig zu den Anschlussstutzen 60, 62 ausgebildet sind. Die beiden Anschlussstutzen 60, 62 weisen bevorzugt ein industrieübliches Standard-Interface zur fluidischen Kopplung mit nicht dargestellten Rohrleitungen des Raumfahrzeugs, insbesondere einer Rakete oder einer Raketenstufe auf.

Die strukturell vereinfachte Sandwichstruktur 48 der endseitigen Umfangsabschnitte 30, 32 erstreckt sich bevorzugt bis unmittelbar an die Anschlussstutzen 60, 62 unter jeweils zumindest bereichsweiser Einbeziehung der Flansche 64, 66 und der Anschlusselemente 68, 70 heran. Die Membran 50 kann anstelle einer folienartigen Membranhülle auch mit einer dünnwandigen CFK-Struktur etc. realisiert sein. Die Membran 50 wird mit dem zumindest teilweise lasttragenden, mittleren Umfangsabschnitt 24 des Tanks 10 luftdicht verbunden, insbesondere verklebt oder verschweißt.

Die evakuierbaren Außenstrukturen 34, 36, die evakuierbare Sandwichstruktur 22 des mittleren Umfangsabschnitts 24 sowie das evakuierbare Trennschott 40 sind mittels mindestens einer Anschlussleitung 74 mit einer nicht dargestellten Vakuumpumpe verbindbar und bis auf einen Druck von 0,01 hPa bis 0,0001 hPa, wie mit dem weißen Pfeil 76 angedeutet, evakuierbar. Zu diesem Zweck sind die vorstehend aufgezählten evakuierbaren Komponenten mittels fluchtender Bohrungen bzw. Kanäle miteinander verbunden, von denen hier der besseren zeichnerischen Übersicht halber lediglich drei Kanäle 78, 80, 82 dargestellt und bezeichnet sind. Darüber hinaus kann die Evakuierung mittels mindestens eines quer zur Längsmittelachse 12 verlaufenden, nicht eingezeichneten Ringkanals im Bereich der evakuierbaren Sandwichstruktur 22 erfolgen, der durchgehende Kanäle innerhalb der Sandwichstruktur 22 miteinander pneumatisch bzw. fluidisch verbindet. Entsprechend können derartige Ringkanäle auch im Bereich der evakuierbaren Außenstrukturen 34, 36 der kalottenförmigen endseitigen Umfangsabschnitte 30, 32 des Tanks 10 sowie im Bereich des evakuierbaren Trennschotts 40 vorgesehen sein. Darüber hinaus kann die Evakuierung der Sandwichstruktur 22 auch indirekt über das Trennschott 40 (so genanntes "Common Bulkhead") oder die evakuierbaren Außenstrukturen 34, 36 der kalottenförmigen endseitigen Umfangsabschnitte 30, 32 des Tanks 10 erfolgen. Infolgedessen verfügt der erfindungsgemäße Tank 10 in Bodennähe unter atmosphärischen Bedingungen über eine ausgezeichnete thermische Isolation, wobei zugleich ein hervorragender Explosionsschutz gegeben ist.

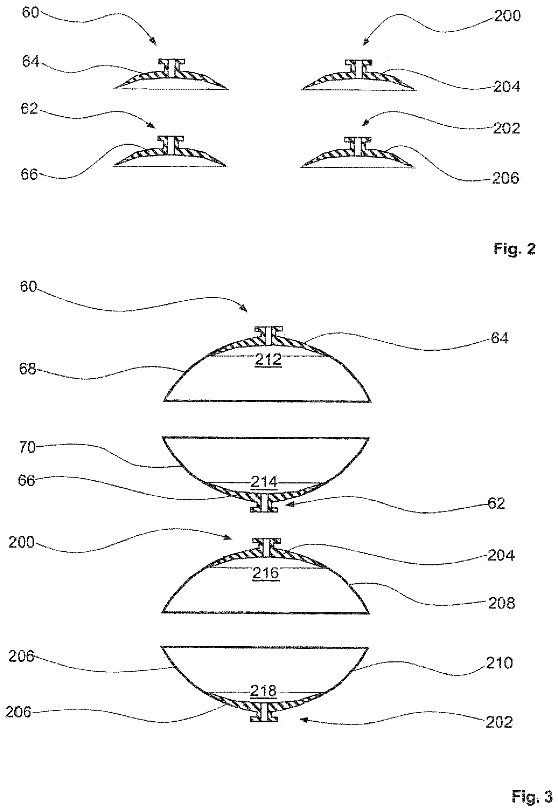

Die zylindrische, evakuierbare Sandwichstruktur 22 ist bevorzugt mit mindestens sechs umfangsseitig aneinandergereihten und in Längsrichtung des Tanks 10 druckdicht zusammengefügten, in der Figur 1 nicht dargestellten, schalenartigen Sandwichplattensegmenten gebildet (vgl. hierzu Fig. 2 bis 7).

Der mittlere Umfangsabschnitt 24 des Tanks 10 umfasst einen ersten und einen zweiten Hohlzylinderabschnitt 90, 92, deren freie Endabschnitte 94, 96 mittels einer bevorzugt radial untenliegenden sowie näherungsweise hohlzylindrischen Verbindungshülse 100 zur Schaffung des Kunststoffmantels 14 fest zusammengefügt sind, wobei das Trennschott 40 seinerseits radial innenseitig bzw. mit einer Innenseite 98 des Tanks 10 fest mit der Verbindungshülse 100 verbunden ist, zum Beispiel mit dieser verklebt ist. Das feste Zusammenfügen der Hohlzylinderabschnitte 90, 92, mittels der Verbindungshülse 100 unter Einbeziehung des evakuierbare Trennschotts 40 erfolgt bevorzugt durch Verkleben oder Verschweißen sowie gegebenenfalls ergänzend mit Hilfe einer Vielzahl von umfangsseitig gleichmäßig zueinander beabstandet angeordneten - hier jedoch zeichnerisch lediglich angedeuteten - Verbindungselementen 102, wie Bolzen, Nieten oder dergleichen. Die Sandwichstruktur 46 des Trennschott 40 verfügt über eine evakuierbare Kernstruktur 104.

Die endseitigen Umfangsabschnitte 30, 32 sind durch einen Faserlegeprozess, insbesondere in Form des bekannten AFP-Verfahrens oder des Wickelverfahrens, im Zuge des erfindungsgemäßen (Herstellungsverfahrens einstückig zu dem mittleren Umfangsabschnitt 24 ausgebildet und hierbei jeweils von der Verbindungshülse 100 axial weggerichtet sowie jeweils im Wesentlichen zweidimensional gekrümmt bzw. näherungsweise kalottenförmig ausgebildet.

Nicht dargestellte Decklagen des Trennschotts 40 können zum Beispiel unter Nutzung des bekannten AFP-Verfahrens oder des Platzierens passender Zuschnitte mittels des Pick- und Place-Verfahrens, die einem auf dem Gebiet der Faserverbundkunststoffe tätigen Fachmann gleichermaßen bekannt sind, hergestellt werden. Für die permeable Sandwichstruktur 46 bzw. die evakuierbare Kernstruktur 104 des Trennschotts 40 können beispielsweise perforierte "Honeycomb"-Matten, so genannte "Fluted-Core" oder "Corrugated-Core"-Strukturen aus CFK-CFK zum Einsatz kommen. Das primär aus Gründen der Spannungsverteilung in Druckbehältern vorzugsweise gekrümmt ausgeführte Trennschott 40 wird auf einem geometrisch korrespondierend ausgebildeten Formwerkzeug in einem Autoklaven ausgehärtet und mit der Verbindungshülse 100 zum Beispiel verklebt, was durch eine der besseren zeichnerischen Übersicht nicht dargestellte, mindestens eine umlaufende Klebenaht oder dergleichen erfolgen kann.

Die obere, erste Kammer 42 weist zusätzlich zu dem ersten Anschlussstutzen 60 eine Entnahmeleitung 110 auf, während die untere, zweite Kammer 44 neben dem zweiten Anschlussstutzen 62 eine Be- und Entdrückungsleitung 112 aufweist. Das Be- und Entdrücken der Kammer 42 erfolgt durch den oberen, ersten Anschlussstutzen 60, wohingegen das Beladen mit dem flüssigen oder gasförmigen Stoff und das Entnehmen des flüssigen oder gasförmigen Stoffes - wie mit dem schwarzen Doppelpfeil 114 angedeutet ist - durch die abschnittsweise parallel zur Längsmittelachse 12 verlaufende Entnahme- und Befüllungsleitung 110 erfolgt. Das Be- und Entdrücken der unteren, zweiten Kammer 44 erfolgt - wie mit dem schwarzen Doppelpfeil 116 angedeutet - über die in Bezug zu der Längsmittelachse 12 leicht schräg nach oben verlaufende Be- und Entdrückungsleitung 112, während das Beladen oder Entladen über den unteren, zweiten Anschlussstutzen 62 vollzogen wird. Im Allgemeinen beträgt eine Materialstärke der Sandwichstruktur 22 des mittleren Umfangsabschnitts 24 des Tanks 10 mindestens 30 mm. Im Fall einer zumindest teilweisen Integration der Entnahmeleitung 110 in die Sandwichstruktur 22 kann eine Erhöhung der Materialstärke der Sandwichstruktur 22 erforderlich werden. Für den Fall, dass die Sandwichstruktur 22 eine in axialer Richtung durchgängige Faltwabenkernstruktur aufweist, können zur Gewährleistung des erforderlichen Durchflussquerschnitts zum Ersetzen der Entnahmeleitung 110 mehrere, entlang der Längsmittelachse 12 verlaufende Faltwabenkanäle innerhalb der Sandwichstruktur 22 fluidisch parallel geschaltet werden, so dass eine Erhöhung der Materialstärke unter Umständen entbehrlich wird. Durch eine zumindest teilweise Integration der Entnahmeleitung 110 in die Sandwichstruktur 22 lassen sich die aerodynamischen Eigenschaften der im Allgemeinen eine Außenhaut eines nicht dargestellten Raumfahrzeugs, wie einer Rakete oder einer Raketenstufe, bildenden zylindrischen Sandwichstruktur 22 weiter optimieren.

Ferner können in sämtlichen evakuierbaren Komponenten des Tanks 10, wie insbesondere dem mittleren Umfangsabschnitt 24, den beiden endseitigen Umfangsabschnitten 30, 32 sowie innerhalb des evakuierten Trennschotts 40 eine Vielzahl von - gleichfalls der besseren zeichnerischen Übersicht halber nicht dargestellten - elektrischen und optischen Leitungen integriert sein. Dasselbe gilt für elektronische Sensoren. Die Kernstruktur der vorstehend erwähnten evakuierbaren Komponenten kann hierbei selbst die Kabelkanäle für die Leitungen und die Sensoren bilden. Alternativ oder ergänzend können zumindest bereichsweise Kabelkanäle in die Kernstrukturen der evakuierbaren Komponenten eingezogen sein.

Die evakuierbare Sandwichstruktur 22 und/oder die evakuierbaren Außenstrukturen 34, 36 des Tanks 10 sind vorzugsweise im Bereich eines Vakuums 122 mittels geeigneter optischer Beschichtungen, einer "Multilayer Insulation" oder eines Trübungsmittels so modifiziert, dass der Wärmetransport durch Strahlung effektiv reduziert ist.

Oberhalb des Flansches 66 des zweiten Anschlussstutzens 62 im Bereich des Anschlusselements 70 in der zweiten Kammer 44 ist ein Leitsystem 120 für den bevorrateten flüssigen oder gasförmigen Stoff vorgesehen, das eine sieb- oder gitterartige räumliche Struktur aufweisen kann.

Die Figuren 2 bis 7 illustrieren eine schematische Darstellung eines erfindungsgemäßen Verfahrens zur Herstellung des Tanks von Fig. 1. Die Figur 2 zeigt die beiden Anschlussstutzen 60, 62 von Figur 1 sowie zwei weitere, konstruktiv identisch aufgebaute Anschlussstutzen 200, 202 mit jeweils einstückig daran ausgeformten näherungsweise sphärischen Flanschen 204, 206, die zur mechanischen Anbindung an den Tank mit Hilfe von Anschlusselementen (vgl. Fig. 3 Bezugsziffern 68, 70, 208, 210). Diese Anschlusselemente bzw. "Domringe" weisen im uneingebauten Zustand im Allgemeinen zunächst eine kreisringförmige Geometrie auf. In der Darstellung von **Figur 3** sind die Anschlusselemente 68, 70 sowie 208, 210 bereits sphärisch drapiert und mit den Flanschen 64, 66, 204, 206 auf geeignete Art und Weise unter Herstellung einer Schäftung miteinander verbunden, insbesondere verklebt oder verschweißt.

Die mit den Anschlusselementen 68, 70, 208, 210 verklebten Anschlussstutzen 60, 62, 202, 202 stellen jeweils einen vorgefertigten Anschlussverbund 212, 214, 216, 218 her, die verfahrensgemäß jeweils als eine Einheit gehandhabt werden.

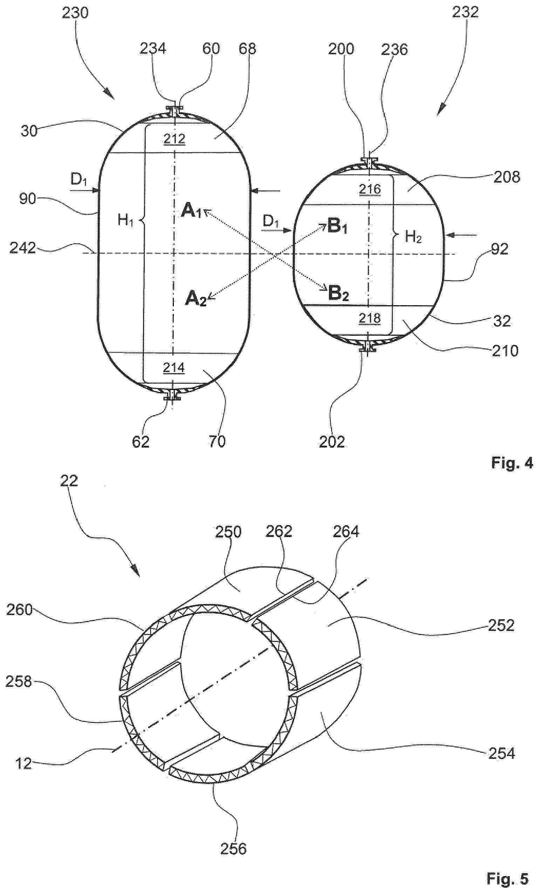

Anhand der Figuren 4, 5 - auf die im weiteren Fortgang der Beschreibung zugleich Bezug genommen wird - soll der prinzipielle Ablauf des erfindungsgemäßen Verfahrens näher erläutert werden. Die vier Anschlussverbünde 212, 214, 216 und 218 sind im Verfahrensstand nach Maßgabe von Figur 4 bereits in Tankrohlinge 230, 232 integriert bzw. mit diesen verklebt.

In einem ersten Verfahrensschritt a) werden zwei vorzugsweise volumenverschiedene, jedoch im Wesentlichen durchmessergleiche Tankrohlinge 230, 232 mit jeweils einem Durchmesser D₁ mit einem Faserverbundkunststoff, wie zum Beispiel CFK vorgefertigt. Dies kann zum Beispiel durch Wickeln oder Ablegen eines strang- oder bandförmigen Carbon-Prepreg-Materials auf einen rotierenden Formkern im Wickelverfahren oder das Ablegen auf einen stillstehenden oder rotierenden Formkern mittels des bekannten AFP-Verfahrens erfolgen.

Die Anschlussstutzen 60, 62, 200, 202 mit den Anschlusselementen 68, 70, 208, 210, die zusammen jeweils einen Anschlussverbund 212, 214, 216, 218 bilden, können zu diesem Zweck vor dem Beginn des Faserlegeprozesses endseitig auf die Kernwerkzeuge aufgelegt werden, so dass die Anschlussstutzen 60, 62, 200, 202 gleichzeitig zur drehbaren Einspannung der Kernwerkzeuge in eine in den Zeichnungen nicht gezeigte Drehvorrichtung für den Formkern dienen. In einer solchen Konstellation erfolgt ein so genannter "Co-Bonding"-Prozess der Anschlussverbünde 212, 214, 216, 218 mit den Tankrohlingen 230, 232 im Zuge der Aushärtung des fertig abgelegten oder gewickelten Carbon-Prepreg-Materials bzw. des CFK. Zur Erhöhung der Dichtigkeit der späteren Tanks werden einzelne Lagen beim Vorfertigen der Tankrohlinge 230, 232 während des Faserlegeprozesses mit einem so genannten "ThinPly"-Prepreg-Material realisiert.

Eine Geometrie des nicht dargestellten Formkerns für die Tankrohlinge 230, 232 entspricht im Wesentlichen jeweils einem Zylinder, dessen beide Stirnflächen bzw. Stirnseiten zweidimensional nach außen gekrümmt bzw. näherungsweise sphärisch oder kalottenförmig ausgebildet sind. Eine axiale Höhe H₁ des ersten Tankrohlings 230 ist bevorzugt größer als eine axiale Höhe H₂ des zweiten Tankrohlings 232. Durch den Faserlege- oder Wickelprozess werden der erste und der zweite Hohlzylinderabschnitt 90, 92 sowie die kalottenförmigen endseitigen Umfangsabschnitte des herzustellenden späteren Tanks ausgebildet (vgl. Figur 1, Bezugsziffern 10, 30, 32).

In einem zweiten Verfahrensschritt b) werden die Tankrohlinge 230, 232 jeweils entlang einer quer zu ihren jeweiligen Längsmittelachsen 234, 236 verlaufenden Schnittlinie 242 vollständig durchtrennt, wodurch vier Tankkomponenten A_{1,2} sowie B_{1,2} bzw. Tankhälften entstehen. Der Trennvorgang erlaubt zugleich das Entformen der Tankkomponenten A_{1,2} sowie B_{1,2} von den Formkernen der Faserlegemaschine. Im Zuge des Trennvorgangs wird der erste Tankrohling 230 in eine erste und eine zweite Tankkomponente A_{1,2} zerlegt und der zweite Tankrohling 232 wird in eine erste und eine zweite Tankkomponente B_{1,2} aufgeteilt.

Zur Gewährleistung einer hinreichenden elektrischen Isolierung der Anschlussstutzen 60, 62, 200, 202 und eines Dehnungsausgleichs bei den betriebsbedingten hohen Temperaturdifferenzen zwischen den metallischen Komponenten und den mit Faserverbundkunststoffen gefertigten Bauteilen, sind die Anschlusselemente 68, 70, 208, 210 bevorzugt mit einem glasfaserverstärkten Kunststoff (GFK) gebildet. Zur Fertigung der bevorzugt in zwei Richtungen des Raumes drapierbaren Anschlusselemente 68, 70, 208, 210 können Zuschnitte eines Gewebes, eines Multiaxialgeleges etc. Verwendung finden, die auf ein nicht dargestelltes, entsprechend sphärisch gekrümmtes Formwerkzeug drapiert und beispielsweise mittels eines Harzinfusionsverfahrens verarbeitet und anschließend ausgehärtet werden.

Das Verkleben der Anschlusselemente 68, 70, 208, 210 bzw. der Domringe mit den Flanschen 64, 66, 204, 206 bzw. den Polkappen der Anschlussstutzen 60, 62, 200, 202 mit den endseitigen Umfangsabschnitten der beiden Tankrohlinge 230, 232 - von denen hier lediglich die endseitigen Umfangsabschnitte 30, 32 des fertigen Tanks von Figur 1 bezeichnet sind - kann abweichend von dem vorstehend erläuterten Co-Bonding-Prozess beim Faserlegen der beiden Tankrohlinge 230, 232 auch erst nach dem Abschluss des Faserlegeprozesses, dem Aushärten der gefertigten Tankrohlinge 230, 232 und dem Zusammenfügen der insgesamt vier Tankkomponenten A_{1,2} sowie B_{1,2} zu zwei Tanks erfolgen.

In einem dritten und letzten Verfahrensschritt c) werden die vier Tankkomponenten A_{1,2} und B_{1,2} zu dem Tank 10 von Figur 1 und einem weiteren, in den Zeichnungen der besseren zeichnerischen Übersicht halber nicht dargestellten zweiten Tank, zusammengefügt, was zum Beispiel durch Verkleben, Verschweißen und/oder mit Hilfe von Verbindungselementen wie Nieten, Bolzen, Klemmen etc. erfolgen kann. Von wesentlicher Bedeutung in diesem Zusammenhang ist, dass die vorgefertigten Tankkomponenten A_{1,2} und B_{1,2} - in die bereits jeweils die Anschlussverbünde 212, 214, 216, 218 integriert sind - "Überkreuz" zusammengefügt werden, das heißt die erste Tankkomponente A₁ des ersten Tankrohlings 230 bildet beispielsweise zusammen mit der zweiten Tankkomponente B₂ des zweiten Tankrohlings 232 den Tank 10 von Figur 1 aus und die zweite Tankkomponente A₂ des ersten Tankrohlings 230 bildet zusammen mit der ersten Tankkomponente B₁ des zweiten Tankrohlings 232 den in den Zeichnungen nicht dargestellten zweiten Tank.

Die Figur 5 illustriert in einer vereinfachten perspektivischen Ansicht die Herstellung der evakuierbaren Sandwichstruktur (vgl. inbs. Figur 1, Bezugsziffer 22).

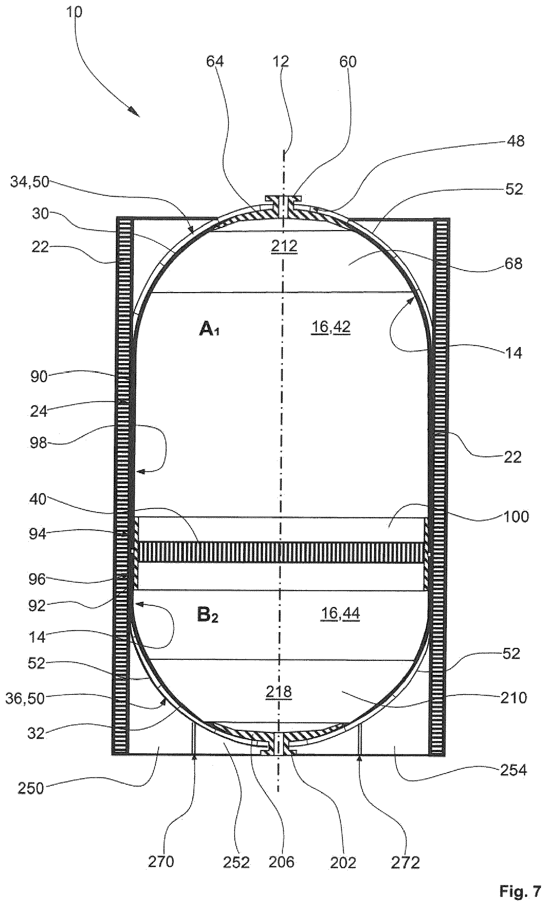

Die eine näherungsweise hohlzylindrische Geometrie aufweisende, evakuierbare Sandwichstruktur 22 wird hier lediglich exemplarisch mit sechs umfangsseitig angeordneten Sandwichsegmenten 250 bis 260 gebildet. Eine hiervon abweichende Anzahl von Sandwichsegmenten ist gleichfalls möglich. Die bevorzugt jeweils konstruktiv identischen Sandwichsegmente 250 bis 260 werden zur Schaffung der evakuierbaren Sandwichstruktur umfangsseitig gleichmäßig verteilt auf dem mittleren Umfangsabschnitt des damit auszurüstenden Tanks, wie zum Beispiel dem Tank 10 von Figur 1, positioniert und fest mit diesem verbunden, was beispielsweise durch Verkleben, Verschweißen etc. erfolgen kann. Zugleich werden die in der **Figur 5** der besseren zeichnerischen Übersicht halber nicht bezeichneten, jeweils parallel zur Längsmittelachse 12 des späteren Tanks verlaufenden, gegenüberliegenden Längskanten - von denen der besseren zeichnerischen Übersicht halber lediglich zwei Längskanten 262, 264 der Sandwichsegmente 250, 252 bezeichnet sind - vakuumdicht unter Schaffung einer Längsnaht (vgl. Figur 7, Bezugsziffer 270) miteinander verbunden, was beispielsweise durch Verkleben, Verschweißen etc. erfolgen kann.

Die sechs Sandwichsegmente 250 bis 260 können wiederum aus CFK-Prepreg-Decklagen mittels des AFP-Verfahrens und/oder des Pick- und Place-Prozesses mit verformbaren, perforierten "Honeycomb"-Matten und/oder mit "Fluted-Core"-Strukturen aus CFK oder mit einem mit Aramid^{®}-Fasern armierten Kunststoffkern zur Optimierung der thermischen Isolierung mit Hilfe eines geeigneten, zylindrisch gekrümmten Werkzeugs gefertigt und anschließend in einem Autoklaven unter gleichzeitiger Anwendung von Druck und Temperatur ausgehärtet werden.

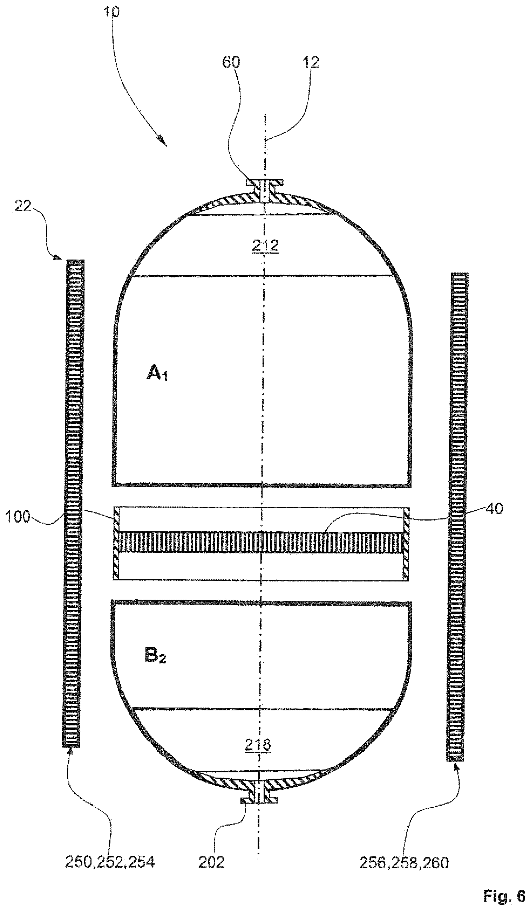

Anhand der Figur 6 wird der weitere Fortgang des Verfahrens bis zur endgültigen Fertigstellung am Beispiel des Tanks 10 von Figur 1 veranschaulicht.

Zunächst werden die erste Tankkomponente A₁ des ersten Tankrohlings, die zweite Tankkomponente B₂ des zweiten Tankrohlings sowie die dazwischen positionierte Verbindungshülse 100 mit dem evakuierbaren Trennschott 40 entlang der Längsmittelachse 12 ausgerichtet, wobei die Tankkomponenten A₁, B₂ bereits koaxial von den sechs Sandwichsegmenten 250 bis 260 zur Schaffung der späteren evakuierbaren Sandwichstruktur 22 umgeben sein können. Analog werden zur Fertigung des zweiten, nicht dargestellten Tanks die zweite Tankkomponente A₂ des ersten Tankrohlings und die erste Tankkomponente B₁ des zweiten Tankrohlings sowie ein weiteres Trennschott mit einer Verbindungshülse miteinander kombiniert.

Die Figur 7 zeigt ausgehend von der Figur 6 den zusammen gefügten Tank 10.

Der in Relation zu der Längsmittelachse 12 rotationssymmetrische Tank 10 ist hier exemplarisch durch das Zusammenfügen der ersten Tankkomponente A₁ des ersten Tankrohlings und der zweiten Tankkomponente B₂ des zweiten Tankrohlings von Figur 4 aufgebaut. Die Anschlussverbünde 212, 218, bestehend aus den beiden Anschlussstutzen 60, 202 mit den Flanschen 64, 206 sowie den Anschlusselementen 68, 210, werden vor dem Zusammenfügen der Tankkomponenten A₁ und B₂ in den Tank 10 integriert. Die Entnahmeleitung sowie die Be- und Entdrückungsleitung sind hier der besseren zeichnerischen Übersicht halber nicht dargestellt. Die Tankkomponenten A₁ und B₂ werden mittels der im Wesentlichen hohlzylindrischen Verbindungshülse 100 zusammengefügt. Hierzu werden die freien Endabschnitte 94, 96 der beiden axial im Wesentlichen auf Stoß positionierten Hohlzylinderabschnitte 90, 92 des mittleren monolithischen Umfangsabschnitts 24 des Kunststoffmantels 14 mittels der Verbindungshülse 100 verklebt. Zusätzlich können Verbindungselemente, wie zum Beispiel Nieten, Bolzen, Klemmen etc. vorgesehen sein. Die Verbindungshülse 100 liegt in dem hier gezeigten, fertig montierten Zustand des Tanks 10 an der Innenseite 98 des faserarmierten Kunststoffmantels 14 an und ist zugleich mit dem evakuierbaren Trennschott 40, das hier abweichend von der sphärisch gekrümmten Ausführung des Tanks 10 von Figur 1 in etwa plan bzw. eben ausgebildet ist. Das evakuierbare Trennschott 40 liegt seinerseits innenseitig an der Verbindungshülse 100 an. Durch das evakuierbare Trennschott 40 wird der Innenraum 16 des Tanks 10 in die beiden Kammern 42, 44 unterteilt, so dass in den Kammern 42, 44 Flüssigkeiten oder Gase mit unterschiedlichen Eigenschaften lagerbar sind.

Die evakuierbare Sandwichstruktur 22 ist mit den beiden Hohlzylinderabschnitten 90, 92 des mittleren Umfangsabschnitts 24 des Kunststoffmantels 14 zumindest bereichsweise verklebt und erstreckt sich axial über die Hohlzylinderabschnitte 90, 92 hinaus.

Die evakuierbare Sandwichstruktur 22 ist mit den hier beispielhaft sechs Sandwichsegmenten von Figur 5 gebildet, von denen hier lediglich drei Sandwichsegmente 250, 252, 254 dargestellt sind. Die drei Sandwichsegmente 250, 252, 254 sind hier illustrativ mithilfe von zwei parallel zur Längsmittelachse 12 verlaufenden Längsnähten 270, 272 in Umfangsrichtung miteinander druckdicht verbunden, sodass eine verlustarme Evakuierung der gesamten zylindrischen Sandwichstruktur 22 möglich ist. Die weiteren, hier nicht eingezeichneten Sandwichsegmente sind ebenfalls über konstruktiv gleichartig ausgeführte Längsnähte umfangsseitig druckdicht aneinander gefügt.

Die evakuierbaren Außenstrukturen 34, 36 an den monolithischen endseitigen Umfangsabschnitten 30, 32 des Tanks 10 sind wiederum mit der strukturell vereinfachten, das heißt im Wesentlichen nicht lasttragfähigen, Sandwichstruktur 48 mit der einhüllenden Membran 50 gebildet.

Die evakuierbaren Außenstrukturen 34, 36, das evakuierbare Trennschott 40 sowie die evakuierbare Sandwichstruktur 22 des Tanks erlauben in Boden- bzw. Erdnähe eine optimale thermische Isolierung der beiden Kammern 42, 44 innerhalb des Tanks 10 bei einem zugleich zuverlässigen Explosionsschutz, da etwaige austretende, hochentzündliche Gase und/oder Flüssigkeiten unverzüglich mittels der in den Zeichnungen nicht dargestellten Vakuumpumpe abgesaugt werden, bevor sich ein zündfähiges Gas- und/oder Flüssigkeitsgemisch bilden kann. Ein zweiter, in den Zeichnungen nicht dargestellter Tank wird analog zu der im Rahmen der Erläuterung der Figuren 2 bis 7 beschriebenen Vorgehensweise aus der zweiten Tankkomponente A₂ und der ersten Tanckomponente B₁ der Tankrohlinge 230, 232 von Figur 4 hergestellt.

Die Erfindung betrifft einen Tank zur Lagerung von flüssigen oder gasförmigen Stoffen, mit einem faserverstärkten Kunststoffmantel, der zumindest einen Innenraum zur Aufnahme der zu lagernden Stoffe begrenzt. Erfindungsgemäß ist vorgesehen, dass mindestens ein Umfangsabschnitt des faserverstärkten Kunststoffmantels eine evakuierbare Sandwichstruktur aufweist, die den Umfangsabschnitt vollständig umschließt. Infolgedessen weist der Tank ein geringes Gewicht bei einem hohen thermischen Isoliervermögen auf. Darüber hinaus ist ein zuverlässiger Explosionsschutz des Tanks gegeben. Darüber hinaus betrifft die Erfindung ein Verfahren zur Herstellung eines Tanks zur Lagerung von flüssigen oder gasförmigen Stoffen.

### Bezugszeichenliste

- 10: Tank
- 12: Längsmittelachse
- 14: faserverstärkter Kunststoffmantel
- 16: Innenraum
- 18: äußere Umgebung
- 20: Umfangsabschnitt
- 22: evakuierbare Sandwichstruktur
- 24: mittlerer Umfangsabschnitt

- 30: erster endseitiger Umfangsabschnitt (Dom)
- 32: zweiter endseitiger Umfangsabschnitt (Dom)
- 34: evakuierbare Außenstruktur
- 36: evakuierbare Außenstruktur

- 40: evakuierbares Trennschott
- 42: erste Kammer
- 44: zweite Kammer
- 46: Sandwichstruktur (Trennschott)
- 48: Sandwichstruktur (strukturell vereinfachte Sandwichstruktur)
- 50: Membran
- 52: Stützstruktur

- 60: erster Anschlussstutzen
- 62: zweiter Anschlussstutzen
- 64: Flansch (Polkappe)
- 66: Flansch (Polkappe)
- 68: Anschlusselement (Domring)
- 70: Anschlusselement (Domring)

- 74: Anschlussleitung (Vakuumpumpe)
- 76: weißer Pfeil
- 78: Kanal
- 80: Kanal
- 82: Kanal

- 90: erster Hohlzylinderabschnitt
- 92: zweiter Hohlzylinderabschnitt
- 94: freier Endabschnitt
- 96: freier Endabschnitt
- 98: Innenseite (Tank)
- 100: Verbindungshülse
- 102: Verbindungselement
- 104: evakuierbare Kernstruktur (Druckschott)

- 110: Entnahme- und Befüllungsleitung
- 112: Be- und Entdrückungsleitung
- 114: schwarzer Pfeil
- 116: schwarzer Doppelpfeil

- 120: Leitsystem (zweite Kammer)
- 122: Vakuum

- 200: erster Anschlussstutzen
- 202: zweiter Anschlussstutzen
- 204: Flansch (Polkappe)
- 206: Flansch (Polkappe)
- 208: Anschlusselement (Domring)
- 210: Anschlusselement (Domring)
- 212: Anschlussverbund
- 214: Anschlussverbund
- 216: Anschlussverbund
- 218: Anschlussverbund
- 230: erster Tankrohling
- 232: zweiter Tankrohling
- 234: Längsmittelachse (erste Tankrohling)
- 236: Längsmittelachse (zweiter Tankrohling)

- 242: Schnittlinie

- 250: Sandwichsegment
- 252: Sandwichsegment
- 254: Sandwichsegment
- 256: Sandwichsegment
- 258: Sandwichsegment
- 260: Sandwichsegment
- 262: Längskante
- 264: Längskante

- 270: Längsnaht (Sandwichsegment)
- 272: Längsnaht (Sandwichsegment)

- D₁: Durchmesser (Tankrohlinge)
- H_{1,2}: Höhe (Tankrohlinge)

- A₁: erste Tankkomponente (erster Tankrohling)
- A₂: zweite Tankkomponente (erster Tankrohling)
- B₁: erste Tankkomponente (zweiter Tankrohling)
- B₂: zweite Tankkomponente (zweiter Tankrohling)

## Patentansprüche

1. Tank (10) zur Lagerung von flüssigen oder gasförmigen Stoffen, mit einem faserverstärkten Kunststoffmantel (14), der zumindest einen Innenraum (16) zur Aufnahme der zu lagernden Stoffe begrenzt, wobei mindestens ein Umfangsabschnitt (20) des faserverstärkten Kunststoffmantels (14) eine evakuierbare Sandwichstruktur (22) aufweist, die den Umfangsabschnitt (20) vollständig umschließt, **dadurch gekennzeichnet,**
• **dass** der mindestens eine Umfangsabschnitt (20) ein mittlerer Umfangsabschnitt (24) ist, an den sich beidseits jeweils ein endseitiger Umfangsabschnitt (30, 32) anschließt, der jeweils mit einer evakuierbaren Außenstruktur (34, 36) bedeckt ist,
• wobei der Innenraum (16) mittels eines evakuierbaren Trennschotts (40) zur Schaffung einer ersten und einer zweiten Kammer (42, 44) unterteilt ist,
• wobei die evakuierbare Sandwichstruktur (22) des mittleren Umfangsabschnitts (24), die evakuierbaren Außenstrukturen (34, 36) der beiden endseitigen Umfangsabschnitte (30, 32) sowie das evakuierbare Trennschott (40) mit mindestens einer Anschlussleitung (74) zur Evakuierung verbunden sind.

2. Tank (10) nach einem Ansprüche 1, **dadurch gekennzeichnet, dass** der mittlere Umfangsabschnitt (24) und die beiden endseitigen Umfangsabschnitte (30, 32) mit einem Faserverbundkunststoff gebildet sind.

3. Tank (10) nach einem der Ansprüche 1 bis 2, **dadurch gekennzeichnet, dass** die evakuierbare Sandwichstruktur (22) fest mit dem mittleren Umfangsabschnitt (24) verbunden und lasttragend ausgeführt ist.

4. Tank (10) nach Anspruch 3, **dadurch gekennzeichnet, dass** die evakuierbaren Außenstrukturen (34, 36) der beiden endseitigen Umfangsabschnitte (30, 32) mit einer strukturell vereinfacht aufgebauten Sandwichstruktur (48), insbesondere mit einer beabstandeten Membran (50) und/oder mit einer mit einem Faserverbundkunststoff aufgebauten Stützstruktur (52), gebildet sind.

5. Tank (10) nach einem der Ansprüche 1 bis 4, **dadurch gekennzeichnet, dass** jeder der beiden endseitigen Umfangsabschnitte (30, 32) jeweils einen Anschlussstutzen (60, 62) mit einem in Richtung des Innenraums (16) gerichteten Flansch (64, 66) aufweist, wobei die Flansche (64, 66) jeweils mittels eines mit einem glasfaserverstärkten Kunststoff gebildeten Anschlusselements (68, 70) mit dem jeweils zugeordneten endseitigen Umfangsabschnitt (30, 32) fest verbunden sind.

6. Tank (10) nach einem der Ansprüche 1 bis 5, **dadurch gekennzeichnet, dass** der mittlere Umfangsabschnitt (24) einen ersten Hohlzylinderabschnitt (90) und einen zweiten Hohlzylinderabschnitt (92) aufweist, deren einander zugewandte freie Endabschnitte (94, 96) mittels einer bevorzugt radial innenliegenden Verbindungshülse (100) zur Schaffung des Kunststoffmantels (14) zusammengefügt sind, wobei das evakuierbare Trennschott (40) innenseitig mit der Verbindungshülse (100) verbunden ist.

7. Tank (10) nach einem der Ansprüche 1 bis 6, **dadurch gekennzeichnet, dass** die endseitigen Umfangsabschnitte (30, 32) einstückig zum mittleren Umfangsabschnitt (24) ausgeführt sind und jeweils von der Verbindungshülse (100) weggerichtet sowie im Wesentlichen kalottenförmig ausgebildet sind.

8. Tank (10) nach einem der Ansprüche 1 bis 7, **dadurch gekennzeichnet, dass** die erste Kammer (42) eine Entnahme- und Befüllungsleitung (110) und die zweite Kammer (44) eine Be- und Entdrückungsleitung (112) aufweist.

9. Tank (10) nach einem der Ansprüche 1 bis 8, **dadurch gekennzeichnet, dass** die evakuierbare Sandwichstruktur (22) des mittleren Umfangsabschnitts (24), die evakuierbaren Außenstrukturen (34, 36) der endseitigen Umfangsabschnitte (30, 32) sowie das evakuierbare Trennschott (40) elektrische oder optische Leitungen und/oder Sensoren aufweisen.

10. Tank (10) nach einem der Ansprüche 1 bis 9, **dadurch gekennzeichnet, dass** zumindest die evakuierbare Sandwichstruktur (22) des mittleren Umfangsabschnitts (24) im Bereich eines Vakuums (122) mittels optischer Beschichtungen, einer mehrlagigen Isolation und/oder eines Trübungsmittels derart modifiziert ist, dass ein Wärmetransport durch Strahlung effektiv reduziert ist.

11. Verfahren zur Herstellung eines Tanks (10) zur Lagerung von flüssigen oder gasförmigen Stoffen, nach Maßgabe eines der Patentansprüche 1 bis 10, **gekennzeichnet durch** die folgenden Schritte:
a) Vorfertigen von zwei vorzugsweise volumenverschiedenen und im Wesentlichen durchmessergleichen Tankrohlingen (230, 232) mit einem Faserverbundkunststoff,
b) Durchtrennen des ersten und zweiten Tankrohlings (230, 232) quer zu deren Längsmittelachsen (234, 236) in eine erste und eine zweite Tankkomponente (A_{1,2}) des ersten Tankrohlings (230) sowie eine erste und zweite Tankkomponente (B_{1,2}) des zweiten Tankrohlings (232), und
c) Zusammenfügen jeweils einer Tankkomponente (A_{1,2}) des ersten Tankrohlings (239) und jeweils einer Tankkomponente (B_{1,2}) des zweiten Tankrohlings zu einem ersten und einem zweiten Tank (10) .

12. Verfahren nach Anspruch 11, **dadurch gekennzeichnet, dass** auf mindestens einen mittleren Umfangsabschnitt (24) jedes Tanks (10) eine lasttragende und evakuierbare Sandwichstruktur (22) aufgebracht wird.

13. Verfahren nach Anspruch 11 oder 12, **dadurch gekennzeichnet, dass** auf jeweils zwei endseitige Umfangsabschnitte (30, 32) jedes Tanks (10) jeweils eine evakuierbare Außenstruktur (34, 36) aufgebracht wird.

14. Verfahren nach einem der Ansprüche 11 bis 13, **dadurch gekennzeichnet, dass** die erste Tankkomponente (A₁) des ersten Tankrohlings (230) und die zweite Tankkomponente (B₂) des zweiten Tankrohlings (232) sowie die zweite Tankkomponente (A₂) des ersten Tankrohlings (230) und die erste Tankkomponente (B₁) des zweiten Tankrohlings (232) mittels jeweils einer vorzugsweise radial innenliegenden Verbindungshülse (100) zusammengefügt werden.

15. Verfahren nach einem der Ansprüche 11 bis 14, **dadurch gekennzeichnet, dass** vor oder während des Verfahrensschrittes c) innenliegend an jeder Verbindungshülse (100) der beiden Tanks (10) ein evakuierbares Trennschott (40) zur Schaffung einer ersten und zweiten Kammer (42, 44) in jedem der beiden Tanks (10) angeordnet wird.

16. Verfahren nach einem der Ansprüche 11 bis 15, **dadurch gekennzeichnet, dass** die Vorfertigung des ersten und zweiten Tankrohlings (230, 232) im Verfahrensschritt a) mittels eines Faserlegeverfahrens, insbesondere eines AFP-Verfahrens oder eines Wickelverfahrens, erfolgt.

17. Verfahren nach einem der Ansprüche 11 bis 16, **dadurch gekennzeichnet, dass** im Verfahrensschritt a) jeder der beiden endseitigen Umfangsabschnitte (30, 32) der zwei Tankrohlinge (230, 232) mit einem Anschlussstutzen (60, 62, 200, 202) versehen wird.

## Claims

1. Tank (10) for the storage of liquid or gaseous substances, with a fibre-reinforced plastic jacket (14) which bounds at least one interior space (16) for the accommodation of the substances to be stored, wherein at least one peripheral section (20) of the fibre-reinforced plastic jacket (14) has an evacuable sandwich structure (22), which completely encloses the peripheral section (20), **characterised in that**,
• the at least one peripheral section (20) is a central peripheral section (24), which is adjoined on both sides, in each case by an end-face peripheral section (30, 32), which in each case is covered by an evacuable outer structure (34, 36), wherein
• the interior space (16) is divided by means of an evacuable dividing bulkhead (40) so as to create a first and a second chamber (42, 44), wherein
• the evacuable sandwich structure (22) of the central peripheral section (24), the evacuable outer structures (34, 36) of the two end-face peripheral sections (30, 32), and the evacuable dividing bulkhead (40), are connected to at least one connecting line (74) for purposes of evacuation.

2. Tank (10) according to Claim 1, **characterised in that**, the central peripheral section (24) and the two end-face peripheral sections (30, 32) are formed from a fibre-reinforced plastic composite.

3. Tank (10) according to one of the Claims 1 to 2, **characterised in that**, the evacuable sandwich structure (22) is fixedly connected to the central peripheral section (24) and is of load-bearing design.

4. Tank (10) according to Claim 3, **characterised in that**, the evacuable outer structures (34, 36) of the two end-face peripheral sections (30, 32) are formed from a sandwich structure (48) of structurally simplified construction, in particular with a spaced membrane (50), and/or with a supporting structure (52) constructed from a fibre-reinforced plastic composite.

5. Tank (10) according to one of the Claims 1 to 4, **characterised in that**, each of the two end-face peripheral sections (30, 32) has a respective connecting piece (60, 62), with a flange (64, 66) directed towards the interior space (16), wherein the flanges (64, 66) are in each case fixedly connected to the respectively associated end-face peripheral sections (30, 32) by means of a connecting element (68, 70) formed from a glass-fibre reinforced plastic.

6. Tank (10) according to one of the Claims 1 to 5, **characterised in that**, the central peripheral section (24) has a first hollow cylindrical section (90) and a second hollow cylindrical section (92), the free end sections (94, 96) of which, facing each other, are joined together by means of a preferably radially inner connecting sleeve (100) so as to create the plastic jacket (14), wherein the evacuable dividing bulkhead (40) is connected to the inner face of the connecting sleeve (100).

7. Tank (10) according to one of the Claims 1 to 6, **characterised in that**, the end-face peripheral sections (30, 32) are designed in one piece with the central peripheral section (24), and in each case are directed away from the connecting sleeve (100), and are essentially of dome-shaped design.

8. Tank (10) according to one of the Claims 1 to 7, **characterised in that**, the first chamber (42) has an extraction and filling line (110), and the second chamber (44) has a pressurisation and depressurisation line (112).

9. Tank (10) according to one of the Claims 1 to 8, **characterised in that**, the evacuable sandwich structure (22) of the central peripheral section (24), the evacuable outer structures (34, 36) of the end-face peripheral sections (30, 32), and the evacuable dividing bulkhead (40), have electrical or optical lines and/or sensors.

10. Tank (10) according to one of the Claims 1 to 9, **characterised in that**, at least the evacuable sandwich structure (22) of the central peripheral section (24) in the region of a vacuum (122) is modified by means of optical coatings, a multilayer insulation, and/or an opacifier, in such a way that heat transport by radiation is effectively reduced.

11. Method for the manufacture of a tank (10) for the storage of liquid or gaseous substances, according to one of the Claims 1 to 10, **characterised by** the following steps:
a) Prefabrication of two tank blanks (230, 232), preferably differing in volume and essentially identical in diameter, from a fibre-reinforced plastic composite,
b) Severance of the first and second tank blanks (230, 232) transversely to their longitudinal central axes (234, 236) into a first and a second tank component (A_{1,2}) of the first tank blank (230), and a first and a second tank component (B_{1,2}) of the second tank blank (232), and
c) Joining together of a tank component (A_{1,2}) of the first tank blank (239) and a tank component (B_{1,2}) of the second tank blank to form a first and a second tank (10).

12. Method according to Claim 11, **characterised in that**, a load-bearing and evacuable sandwich structure (22) is applied to at least a central peripheral section (24) of each tank (10).

13. Method according to Claim 11 or 12, **characterised in that**, an evacuable outer structure (34, 36) is applied in each case to two end-face peripheral sections (30, 32) of each tank (10).

14. Method according to one of the Claims 11 to 13, **characterised in that**, the first tank component (A₁) of the first tank blank (230) and the second tank component (B₂) of the second tank blank (232), together with the second tank component (A₂) of the first tank blank (230) and the first tank component (B₁) of the second tank blank (232), are joined together by means of a respective connecting sleeve (100), which is preferably located radially on the inner face.

15. Method according to one of the Claims 11 to 14, **characterised in that**, prior to or during step c) of the method, an evacuable dividing bulkhead (40) is arranged internally on each connecting sleeve (100) of the two tanks (10) so as to create a first and second chamber (42, 44) in each of the two tanks (10).

16. Method according to one of the Claims 11 to 15, **characterised in that**, the prefabrication of the first and second tank blank (230, 232) in step a) of the method is carried out by means of a fibre-laying method, in particular an AFP method, or a winding method.

17. Method according to one of the Claims 11 to 16, **characterised in that**, in step a) of the method, each of the two end-face peripheral sections (30, 32) of the two tank blanks (230, 232) is provided with a connecting piece (60, 62, 200, 202).

## Revendications

1. Réservoir (10) destiné au stockage de substances liquides ou gazeuses, avec une enveloppe en matière plastique renforcée aux fibres (14), qui limite au moins un espace intérieur (16) pour recevoir les substances à stocker, sachant qu'au moins une section périphérique (20) de l'enveloppe en matière plastique renforcée aux fibres (14) comporte une structure en sandwich (22) pouvant être évacuée, qui entoure complètement la section périphérique (20), **caractérisé en ce que**
• au moins une section périphérique (20) est une section périphérique centrale (24), à laquelle se raccorde respectivement des deux côtés une section périphérique d'extrémité (30, 32), qui est couverte respectivement avec une structure extérieure (34, 36) pouvant être évacuée,
• sachant que l'espace intérieur (16) est subdivisé au moyen d'une cloison de séparation centrale pouvant être évacuée (40) pour créer une première et une deuxième chambre (42, 44),
• sachant que la structure en sandwich (22) pouvant être évacuée de la section périphérique centrale (24), les structures extérieures pouvant être évacuées (34, 36) des deux sections périphériques d'extrémité (30, 32) ainsi que la cloison de séparation pouvant être évacuée (40) sont reliées à au moins un conduit de raccordement (74) pour évacuation.

2. Réservoir (10) selon la revendication 1, **caractérisé en ce que** la section périphérique centrale (24) et les deux sections périphériques d'extrémité (30, 32) sont formées avec une matière plastique composite en fibres.

3. Réservoir (10) selon l'une quelconque des revendications 1 à 2, **caractérisé en ce que** la structure en sandwich (22) pouvant être évacuée est fermement reliée à la section périphérique centrale (24) et est exécutée supportant la charge.

4. Réservoir (10) selon la revendication 3, **caractérisé en ce que** les structures extérieures (34, 36) pouvant être évacuées des deux sections périphériques d'extrémité (30, 32) sont formées avec une structure en sandwich (48) conçue structurellement simplifiée, en particulier avec une membrane espacée (50) et/ou avec une structure de support (52) réalisée avec une matière plastique composite en fibres.

5. Réservoir (10) selon l'une quelconque des revendications 1 à 4, **caractérisé en ce que** chacune des deux sections périphériques d'extrémité (30, 32) comporte respectivement un embout de raccordement (60, 62) avec une bride (64, 66) orientée en direction de l'espace intérieur (16), sachant que les brides (64, 66) sont fermement reliées respectivement au moyen d'un élément de raccordement (68, 70) formé d'une matière plastique renforcée aux fibres de verre à la section périphérique d'extrémité (30, 32) respectivement attribuée.

6. Réservoir (10) selon l'une quelconque des revendications 1 à 5, **caractérisé en ce que** la section périphérique centrale (24) comporte une première section cylindrique creuse (90) et une deuxième section cylindrique creuse (92), dont les sections d'extrémité (94, 96) libres tournées l'une vers l'autre sont assemblées au moyen d'un manchon de liaison (100) situé de préférence radialement à l'intérieur pour créer l'enveloppe en matière plastique (14), sachant que la cloison de séparation pouvant être évacuée (40) est reliée en intérieur au manchon de liaison (100).

7. Réservoir (10) selon l'une quelconque des revendications 1 à 6, **caractérisé en ce que** les sections périphériques d'extrémité (30, 32) sont constituées en une pièce avec la section périphérique centrale (24) et sont respectivement orientées en éloignement du manchon de liaison (100) et sont pour l'essentiel constituées en forme de calotte.

8. Réservoir (10) selon l'une quelconque des revendications 1 à 7, **caractérisé en ce que** la première chambre (42) comporte un conduit de prélèvement et de remplissage (110) et la deuxième chambre (44) comporte un conduit de pressurisation et de dépressurisation (112) .

9. Réservoir (10) selon l'une quelconque des revendications 1 à 8, **caractérisé en ce que** la structure en sandwich pouvant être évacuée (22) de la section périphérique centrale (24), les structures extérieures pouvant être évacuées (34, 36) des sections périphériques d'extrémité (30, 32) ainsi que la cloison de séparation pouvant être évacuée (40) comportent des lignes électriques ou optiques et/ou des capteurs.

10. Réservoir (10) selon l'une quelconque des revendications 1 à 9, **caractérisé en ce qu'**au moins la structure en sandwich pouvant être évacuée (22) de la section périphérique centrale (24) est modifiée dans la zone d'un vide (122) au moyen de revêtements optiques, d'une isolation multicouche et/ou d'un opacifiant, de telle manière qu'un transport de chaleur est efficacement réduit par rayonnement.

11. Procédé de fabrication d'un réservoir (10) pour le stockage de substances liquides ou gazeuses conformément à l'une quelconque des revendications 1 à 10, **caractérisé par** les étapes suivantes :
a) préfabrication de deux ébauches de réservoirs de préférence de volume différent et pour l'essentiel de diamètre identique (230, 232) avec une matière plastique composite en fibres,
b) séparation de la première et de la deuxième ébauche (230, 232) transversalement à leurs axes médians longitudinaux (234, 236) en un premier et un deuxième composant de réservoir (A_{1,2}) de la première ébauche de réservoir (230) ainsi qu'un premier et deuxième composant de réservoir (B_{1,2}) de la deuxième ébauche de réservoir (232) et
c) assemblage respectivement d'un composant de réservoir (A_{1,2}) de la première ébauche de réservoir (239) et respectivement d'un composant de réservoir (B_{1,2}) de la deuxième ébauche de réservoir à un premier et à un deuxième réservoir (10) .

12. Procédé selon la revendication 11, **caractérisé en ce qu'**une structure en sandwich supportant la charge et pouvant être évacuée (22) est disposée sur au moins une section périphérique centrale (24) de chaque réservoir (10) .

13. Procédé selon la revendication 11 ou 12, **caractérisé en ce que** respectivement une structure extérieure (34, 36) pouvant être évacuée est disposée respectivement sur respectivement deux sections périphériques d'extrémité (30, 32) de chaque réservoir (10).

14. Procédé selon l'une quelconque des revendications 11 à 13, **caractérisé en ce que** le premier composant de réservoir (A₁) de la première ébauche de réservoir (230) et le deuxième composant de réservoir (B₂) de la deuxième ébauche de réservoir (232) ainsi que le deuxième composant de réservoir ((A₂) de la première ébauche de réservoir (230) et le premier composant de réservoir (B₁) de la deuxième ébauche de réservoir (232) sont respectivement assemblés au moyen d'un manchon de liaison (100) situé de préférence radialement à l'intérieur.

15. Procédé selon l'une quelconque des revendications 11 à 14, **caractérisé en ce qu'**avant ou pendant l'étape de procédé c), une cloison de séparation (40) pouvant être évacuée est disposée dans chacun des deux réservoirs (10) à l'intérieur sur chaque manchon de liaison (100) des deux réservoirs (10) pour créer une première et une deuxième chambre (42, 44).

16. Procédé selon l'une quelconque des revendications 11 à 15, **caractérisé en ce que** la préfabrication de la première et de la deuxième ébauche (230, 232) a lieu dans l'étape de procédé a) au moyen d'un procédé de pose de fibres, en particulier d'un procédé de placement automatisé des fibres (PAF) ou d'un procédé d'enroulement.

17. Procédé selon l'une quelconque des revendications 11 à 16, **caractérisé en ce que** dans l'étape de procédé a), chacune des deux sections périphériques d'extrémité (30, 32) des deux ébauches de réservoir (230, 232) est dotée d'un embout de raccordement (60, 62, 200, 202).
